# EUROPÄISCHE PATENTSCHRIFT

(11) **EP 2 367 220 B1**
(45) Veröffentlichungstag und Bekanntmachung des Hinweises auf die Patenterteilung: **21.06.2017**
(21) Anmeldenummer: 11154943.2
(22) Anmeldetag: 18.02.2011
(51) Int. Cl.: H01M 10/60

(54) **Kühleelement und Energiespeicher**
Cooling element and energy storage device
Élément de refroidissement et accumulateur d'énergie

(30) Priorität: 05.03.2010 DE 102010010378; 09.11.2010 DE 102010043628
(43) Veröffentlichungstag der Anmeldung: 21.09.2011
(73) Patentinhaber: MAHLE International GmbH, 70376 Stuttgart (DE)
(72) Erfinder: Bauer, Swen -Juri, 70374, Stuttgart (DE); Gierer, Carolin, 73732, Esslingen (DE); Grass, Uwe, 70569, Stuttgart (DE); Grüner, Andreas, 73110, Hattenhofen (DE); Kull, Niklas, 70188, Stuttgart (DE)
(74) Vertreter: BRP Renaud & Partner mbB Rechtsanwälte Patentanwälte Steuerberater

(56) Entgegenhaltungen:
- EP-A1- 2 149 771
- EP-A2- 1 387 424
- WO-A1-2009/109834
- DE-A1- 19 528 116
- DE-A1-102009 016 577
- GB-A- 2 268 189
- US-A- 5 193 611
- US-A- 5 756 227

## Beschreibung

Die vorliegende Erfindung betrifft ein Kühlelement für einen elektrischen Energiespeicher, der einen Stapel aus derartigen Kühlelementen und sich damit abwechselnden Batterieelementen aufweist.

Derartige elektrische Energiespeicher kommen insbesondere bei Elektrofahrzeugen bzw. bei Hybridfahrzeugen mit Elektroantrieb zum Einsatz. Bei der Energieabgabe und beim Aufladen können die Batterieelemente vergleichsweise viel Wärme abgeben, was für deren Dauerhaltbarkeit nachteilig ist. Dementsprechend kommen Kühlelemente zum Einsatz, um diese Wärme abzuführen. Derartige Kühlelemente können eine Kühlkanalstruktur enthalten, die wenigstens einen Kühlkanal umfasst, durch den im Betrieb des Energiespeichers ein Kühlmedium transportiert werden kann, das Wärme aus dem Kühlelement abführt. Innerhalb des Energiespeichers steht das jeweilige Kühlelement mit wenigstens einem Batterieelement wärmeübertragend in Verbindung, wodurch es möglich ist, die Wärme von den Batterieelementen über die Kühlelemente und das Kühlmittel abzuführen.

Aus der DE 195 28 116 A1 ist ein Kühlelement für einen elektrischen Energiespeicher mit zwei Außenplatten offenbart, die jeweils zwei ebene, voneinander abgewandte Außenseiten aufweisen. Eine Innenplatte weist zwei ebene, voneinander abgewandte Außenseiten und eine die Innenplatte durchdringende Kühlkanalstruktur aufweist. Die Kühlkanalstruktur weist zumindest einen Kühlkanal auf, der an den einer Außenseiten der Innenplatten offen ist und einen an einem Rand der Innenplatte angeordneten Kühlmitteleinlass mit einem Rand der Innenplatte angeordneten Kühlmittelauslass fluidisch verbindet. Die Außenplatten liegen mit ihren einander zugewandten Außenseiten an den Außenseiten der Innenplatte flächig an und verschließen dadurch die offenen Seiten des wenigstens einen Kühlkanal der Kühlkanalstruktur.

Die EP 2 149 771 offenbart ein Kühlelement für einen Energiespeicher mit einem Stapel aus solchen Kühlelementen. Das Kühlelement umfasst zwei Außenplatten und einen Innenplatte, wobei die Innenplatte eine Kühlkanalstruktur aufweist.

Die US 5,193,611 offenbart ein für einen elektrischen Energiespeicher geeignetes Kühlelement mit zwei Außenplatten, die jeweils zwei ebene, voneinander abgewandte Außenseiten aufweisen. Das Kühlelement der weist jeweils zwei benachbarte Innenplatten auf, welche jeweils zueinander versetzte Aussparungen. Durch die zueinander versetzt angeordneten Aussparungen wird eine Kühlkanalstruktur definiert, durch welche ein Kühlmittel strömen kann.

Die GB 2 268 189 A offenbart einen Wärmetauscher mit einer Mehrzahl von stapelartig angeordneten Wärmetauscher-Platten, die abwechselnd mit einer Mehrzahl von eine Kühlkanalstruktur aufweisenden Zwischenplatten zwischen zwei Endplatten angeordnet sind.

Die vorliegende Erfindung beschäftigt sich mit dem Problem für ein Kühlelement der eingangs genannten Art bzw. für eine Energiespeichereinrichtung der eingangs genannten Art bzw. für ein zugehöriges Herstellungsverfahren eine verbesserte Ausführungsform anzugeben, die sich insbesondere durch eine effektive Kühlwirkung und/oder durch eine preiswerte Herstellbarkeit auszeichnet.

Dieses Problem wird erfindungsgemäß auf die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das jeweilige Kühlelement plattenförmig auszugestalten, wobei zwei voneinander abgewandte Außenseiten des Kühlelements, die im Stapel des Energiespeichers jeweils an einem Batterieelement zur Anlage kommen, eben auszugestalten, um im Stapel des Energiespeichers eine flächige Kontaktierung mit den üblicherweise ebenfalls ebenen Außenseiten der Batterieelemente zu ermöglichen. Auf diese Weise kann eine großflächige, unmittelbare Kontaktierung zwischen der Außenseite des jeweiligen Kühlelements und der Außenseite des jeweiligen Batterieelements realisiert werden, die insbesondere keinen thermisch isolierenden Luftspalt frei lässt, wodurch insgesamt eine effektive Wärmeübertragung zwischen Batterieelement und Kühlelement realisierbar ist.

Vorzugsweise ist das jeweilige plattenförmige Kühlelement mit Hilfe von drei einzelnen Platten zusammengebaut, nämlich aus einer Innenplatte und zwei Außenplatten, die sandwichartig beiderseits der Innenplatte angeordnet sind. Die jeweilige Außenplatte weist jeweils zwei ebene, voneinander abgewandte Außenseiten auf. Auch die Innenplatte weist zwei ebene, voneinander abgewandte Außenseiten auf. Im Unterschied zu den Außenplatten ist die Innenplatte außerdem mit einer Kühlkanalstruktur ausgestattet, welche die Innenplatte senkrecht zur Plattenebene durchdringt. Die Kühlkanalstruktur umfasst zumindest einen Kühlkanal, der an den beiden Außenseiten der Innenplatte jeweils offen ist und der einen an einem Rand der Innenplatte angeordneten Kühlmitteleinlass mit einem am Rand der Innenplatte angeordneten Kühlmittelauslass fluidisch verbindet. Im zusammengebauten Zustand liegen die Außenplatten mit ihren einander zugewandten Außenseiten an den beiden voneinander abgewandten Außenseiten der Innenplatte flächig an, wodurch die einander zugewandten Außenseiten der beiden Außenplatten die den Außenplatten zugewandten offenen Seiten des jeweiligen Kühlkanals verschließen. Durch die vorgeschlagene Bauweise lässt sich das plattenförmige Kühlelement besonders einfach durch eine Dreifachschichtung einzelner Platten aufbauen, wobei insbesondere auf räumliche Prägungen verzichtet werden kann, um die gewünschten ebenen Außenseiten für eine flächige Kontaktierung mit den Batterieelementen bereitstellen zu können. Die Kühlkanalstruktur wird mit Hilfe der Innenplatte, die zwischen den beiden Außenplatten angeordnet ist, realisiert. Hierzu kann die Innenplatte gestanzt oder geschnitten oder in sonstiger Weise bearbeitet werden.

Zweckmäßig können die Platten miteinander flächig verlötet sein, wodurch die Kühlkanalstruktur dicht nach außen verschlossen ist.

Erfindungsgemäß weisen die Außenplatten und die Innenplatte jeweils zueinander deckungsgleich an einem Rand einen Einlassbügel auf, der in der Ebene des Kühlelements einen Einlassbereich überbrückt, in dem der wenigstens eine Kühlmitteleinlass der Innenplatte angeordnet ist. Zusätzlich weisen die Außenplatten und die Innenplatte jeweils zueinander deckungsgleich an einem Rand einen Auslassbügel auf, der in der Ebene des Kühlelements einen Auslassbereich überbrückt, in dem der wenigstens eine Kühlmittelauslass der Innenplatte angeordnet ist. Durch diese Maßnahmen lassen sich zentrale Einlassbereiche bzw. zentrale Auslassbereiche realisieren, die eine Kühlmittelversorgung vereinfachen.

Erfindungsgemäß weist zumindest eine der Außenplatten eine den Einlassbereich umschließende Einlassdichtung am Einlassbügel auf, die an der von der Innenplatte abgewandten Außenseite absteht. Zusätzlich oder alternativ kann zumindest eine der Außenplatte eine den Auslassbereich umschließende Auslassdichtung am Auslassbügel aufweisen, die an der von der Innenplatte abgewandten Außenseite absteht. Die Bereitstellung derartiger Dichtungen vereinfacht die Montage des Energiespeichers.

Die Einlassbügel und/oder die Auslassbügel liegen zweckmäßig in der Ebene der jeweiligen Platte und können flächig aneinander anliegen und/oder flächig aneinander befestigt sein, insbesondere flächig miteinander verlötet sein. Insbesondere lassen sich die Bügel beim Verbinden der Platten miteinander verbinden.

Zweckmäßig können die aneinander anliegenden Einlassbügel der drei Platten einen Einlasskanalabschnitt bilden, von dem der wenigstens eine Kühlmitteleinlass abgeht. Zusätzlich oder alternativ können die Auslassbügel der drei Platten einen Auslasskanalabschnitt bilden, in den der wenigstens eine Kühlmittelauslass einmündet. Ein derartiger Kanalabschnitt kann im Stapel des Energiespeichers mit entsprechend komplementären bzw. baugleichen Kanalabschnitten benachbarter Batterieelemente bzw. weiterer Kühlelemente einen Einlasskanal bzw. einen Auslasskanal bilden, über welche die Kühlmittelzuführung und die Kühlmittelabführung für die Kühlelemente erfolgt.

Mit Hilfe der hier vorgestellten Kühlelemente kann ein elektrischer Energiespeicher, insbesondere für Fahrzeuganwendungen, aufgebaut werden. Die hierbei außerdem verwendeten Batterieelemente weisen jeweils zwei voneinander abgewandte ebene Außenseiten auf. Die Kühlelemente und die Batterieelemente sind dann einander abwechselnd aufeinander gestapelt, wobei innerhalb des so gebildeten Stapels aus Kühlelementen und Batterieelementen die Außenseiten der Batterieelemente flächig an den Außenseiten der benachbarten Kühlelemente anliegen. Hierdurch wird der gewünschte günstige Wärmeübergang zwischen den Batterieelementen und den Kühlelementen realisiert.

Zweckmäßig können die Batterieelemente zu den Einlassbügeln fluchtende erste Bügel und zu den Auslassbügeln fluchtende zweite Bügel aufweisen, die sich in der Ebene des jeweiligen Batterieelements erstrecken. Innerhalb des Stapels des Energiespeichers bilden dann die einander abwechselnden Einlassbügel und ersten Bügel einen Kühlmitteleinlasskanal, während die einander abwechselnden Auslassbügel und zweiten Bügel einen Kühlmittelauslasskanal bilden. Hierdurch können die Kühlelemente bezüglich der Kühlmittelzuführung und bezüglich der Kühlmittelabführung parallel geschaltet werden.

Zur Realisierung der Batterieelemente kann das jeweilige Batterieelement einen Tragrahmen sowie eine vom Tragrahmen gehaltene Batteriezelle aufweisen. Die Batteriezelle bildet den eigentlichen elektrochemischen Energiespeicher, während der zugehörige Tragrahmen die mechanische Schnittstelle zur Peripherie, also hierzu den Kühlelementen bildet. Insbesondere sind die ersten und zweiten Bügel des Batterieelements am Tragrahmen ausgebildet. Zweckmäßig besitzt jedoch die Batteriezelle an voneinander abgewandten Seiten die ebenen Außenflächen, die mit den ebenen Außenseiten der benachbarten Kühlelemente in Kontakt stehen.

Die hier vorgestellte Erfindung betrifft außerdem ein Verfahren zum Herstellen eines Kühlelements der vorgestellten Bauart. Dieses Herstellungsverfahren umfasst zunächst das Erzeugen der Kühlkanalstruktur in der Innenplatte. Dies kann beispielsweise durch einen Schneidvorgang oder durch einen Stanzvorgang realisiert werden, um den jeweiligen Kühlkanal in der Innenplatte herzustellen. Anschließend erfolgt das Einlegen der Innenplatte zwischen den beiden Außenplatten. Danach können die drei Platten miteinander verlötet werden.

Die Innenplatte kann nach dem Erzeugen der Kühlkanalstruktur Haltebereiche aufweisen, die innerhalb des Einlassbügels und innerhalb des Auslassbügels über den Rand der Innenplatte vorstehen. Diese Haltebereiche dienen zur Positionierung der Kühlkanalstruktur relativ zur übrigen Innenplatte. Da der jeweilige Kühlmittelkanal die Innenplatte in der Stapelrichtung, also quer zur Plattenebene vollständig durchsetzt, kommt es beim Erzeugen der Kühlkanalstruktur zum Freischneiden von Bereichen bzw. Teilen der Innenplatte, die den jeweiligen Kühlkanal innerhalb der Plattenebene begrenzen. Ohne besagte Haltebereiche wären die einzelnen Komponenten der Innenplatte relativ zueinander frei beweglich. Durch die Haltebereiche sind jedoch sämtliche Bestandteile der Innenplatte auch nach dem Einbringen der Kühlkanalstruktur noch miteinander integral verbunden. Nach dem Verlöten der Platten können jedoch diese Haltebereiche entfernt werden, was das Einströmen in die Einlassöffnungen bzw. das Ausströmen aus den Auslassöffnungen verbessert. Sofern die Innenplatte hinreichend fest zwischen den Außenplatten fixiert ist, kann das Entfernen der Haltebereiche auch nach dem Einlegen der Innenplatte zwischen den Außenplatten, jedoch vor dem Verlöten erfolgen.

Das Entfernen der Haltebereiche kann beispielsweise mittels eines Stanzvorgangs realisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: ein stark vereinfachter, prinzipieller Längsschnitt durch einen Bereich eines Energiespeichers,
- Fig. 2: eine Ansicht eines Kühlelements,
- Fig. 3: eine Ansicht auf drei Platten zur Herstellung des Kühlelements,
- Fig. 4: eine Ansicht des Kühlelements, jedoch bei einer anderen Ausführungsform bzw. bei einem anderen Fertigungsgrad,
- Fig. 5: eine Ansicht eines Batterieelements,
- Fig. 6: Ansichten des Kühlelements bei verschiedenen Herstellungsphasen a-d.

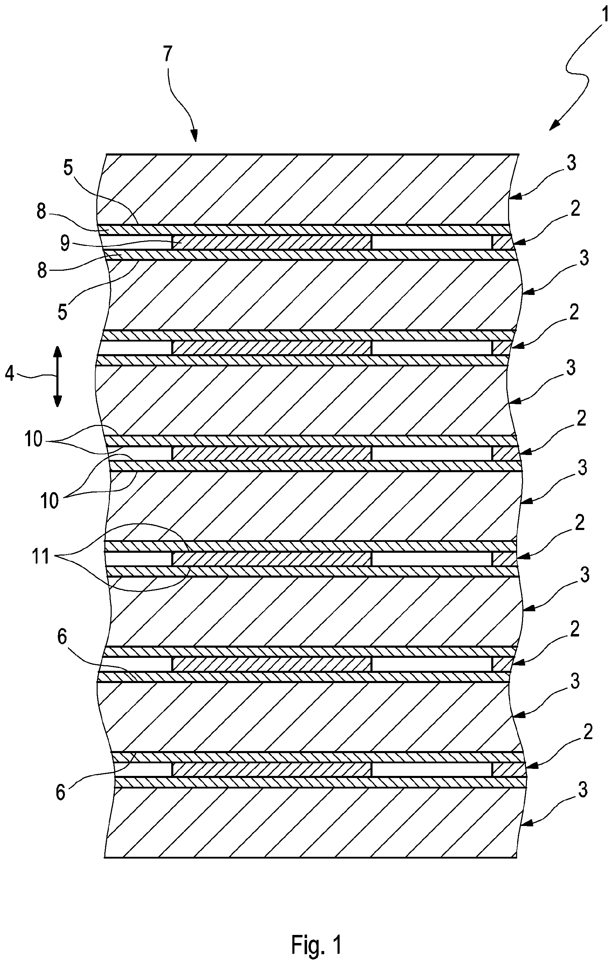

Entsprechend Figur 1 umfasst ein elektrischer Energiespeicher 1, der beispielsweise in einem Fahrzeug mit einem reinen Elektroantrieb oder mit einem einen Elektroantrieb umfassenden Hybridantrieb ausgestattet ist, mehrere Kühlelemente 2 und mehrere Batterieelemente 3, die jeweils plattenförmig ausgestaltet sind und senkrecht zu ihrer jeweiligen Plattenebene in einer Stapelrichtung 4 aufeinander gestapelt sind. Die Kühlelemente 2 besitzen jeweils zwei voneinander abgewandte Außenseiten 5, die sich jeweils eben und senkrecht zur Stapelrichtung 4 erstrecken. Auch die Batterieelemente 3 besitzen jeweils zwei voneinander abgewandte Außenseiten 6, die sich jeweils eben und senkrecht zur Stapelrichtung 4 erstrecken. Erkennbar sind die Kühlelemente 2 und die Batterieelemente 3 so aufeinander gestapelt, dass sie innerhalb eines so gebildeten Stapels 7 über ihre Außenseiten 5, 6 flächig aneinander anliegen. Insbesondere liegen die Kühlelemente 2 im Wesentlichen über die gesamte jeweilige Außenseite 5 an der zugewandten Außenseite 6 des benachbarten Batterieelements 3 flächig an. Die so gebildete, insbesondere durchgehende, lückenlose und spaltfreie, Kontaktierung zwischen Kühlelementen 2 und Batterieelementen 3 führt zu einem hohen Wärmeübergang zwischen den Batterieelementen 3 und den Kühlelementen 2.

Entsprechend den Figuren 1 bis 4umfasst das jeweilige Kühlelement 2 einen dreilagigen oder dreischichtigen Aufbau, der zwei Außenplatten 8 und eine Innenplatte 9 umfasst. Die jeweilige Außenplatte 8 besitzt jeweils zwei, voneinander abgewandte Außenseiten 10, die jeweils eben konfiguriert sind. Auch die Innenplatte 9 besitzt zwei ebene, voneinander abgewandte Außenseiten 11. Des Weiteren weist die Innenplatte 9 eine Kühlkanalstruktur 12 auf, die zumindest einen Kühlkanal 13 besitzt. Im Beispiel umfasst die Kühlkanalstruktur 12 insgesamt sechs separate Kühlkanäle 13, die jeweils einen separaten Kühlmitteleinlass 14 mit einem Kühlmittelauslass 15 fluidisch verbinden und somit parallel durchströmbar sind. Die Kühlmittelkanäle 13 sind dabei an den beiden Außenseiten 11 der Innenplatte 9 jeweils offen, da die Kühlkanalstruktur 12 die Innenplatte 9 in der Stapelrichtung 4, also quer zur zugehörigen Plattenebene durchdringt. Der jeweilige Kühlmitteleinlass 14 ist an einem Rand 16 der Innenplatte 9 angeordnet. Ebenso befindet sich der jeweilige Kühlmittelauslass 15 an einem Rand 16 der Innenplatte 9. Im Beispiel befinden sich der jeweilige Kühlmitteleinlass 14 und der jeweilige Kühlmittelauslass 15 am selben Rand 16 der Innenplatte 9.

Im montierten Zustand des Kühlelements 2 liegen die Außenplatten 8 mit den beiden Außenseiten 10, die einander bzw. der Innenplatte 9 zugewandt sind, an den beiden Außenseiten 11 der Innenplatte 9, die voneinander abgewandt bzw. den Außenplatten 8 zugewandt sind, flächig an. Durch diese flächige Kontaktierung der Außenplatten 8 an der Innenplatte 9 werden die Kühlkanäle 13 in der Stapelrichtung 4 verschlossen. Im zusammengebauten Zustand sind die einzelnen Platten 8, 9 zweckmäßig flächig miteinander verlötet.

Die Innenplatte 9 weist an ihrem Rand 16 einen in der jeweiligen Plattenebene liegenden Einlassbügel 17 auf, der einen Einlassbereich 18 überbrückt, in dem der jeweilige Kühlmitteleinlass 14 angeordnet ist. Ferner weist die Innenplatte 9 außerdem einen in der jeweiligen Plattenebene liegenden Auslassbügel 19 auf, der einen Auslassbereich 20 überbrückt, in dem der jeweilige Kühlmittelauslass 15 angeordnet ist. Deckungsgleich zu den Bügeln 17 und 19 der Innenplatte 9 weisen auch die Außenplatten 8 am jeweiligen Rand 21 jeweils einen in der jeweiligen Plattenebene liegenden Einlassbügel 22 und einen in der jeweiligen Plattenebene liegenden Auslassbügel 23 auf. Im montierten Zustand liegen die Einlassbügel 22, 17, 22 flächig aneinander an. Ferner sind die Einlassbügel 22, 17, 22 flächig aneinander befestigt, insbesondere miteinander verlötet. Auch die Auslassbügel 23, 19, 23 liegen im montierten Zustand flächig aneinander an bzw. sind flächig aneinander befestigt, insbesondere miteinander verlötet.

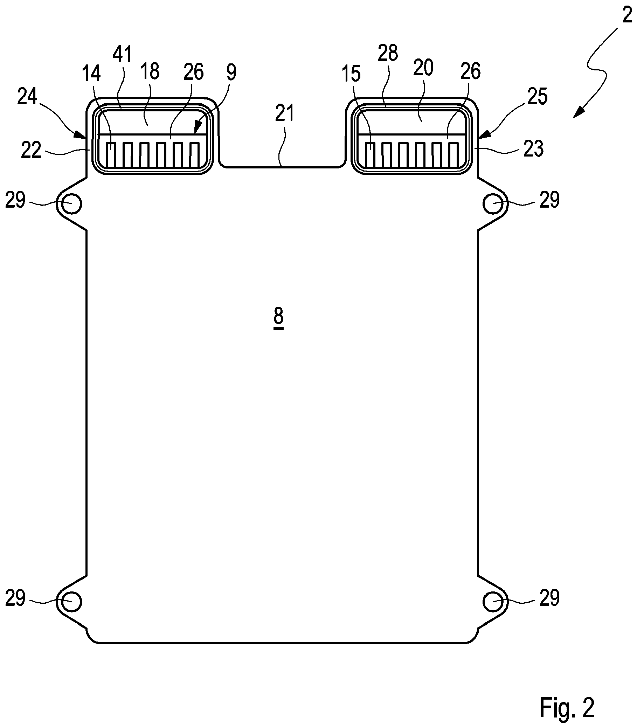

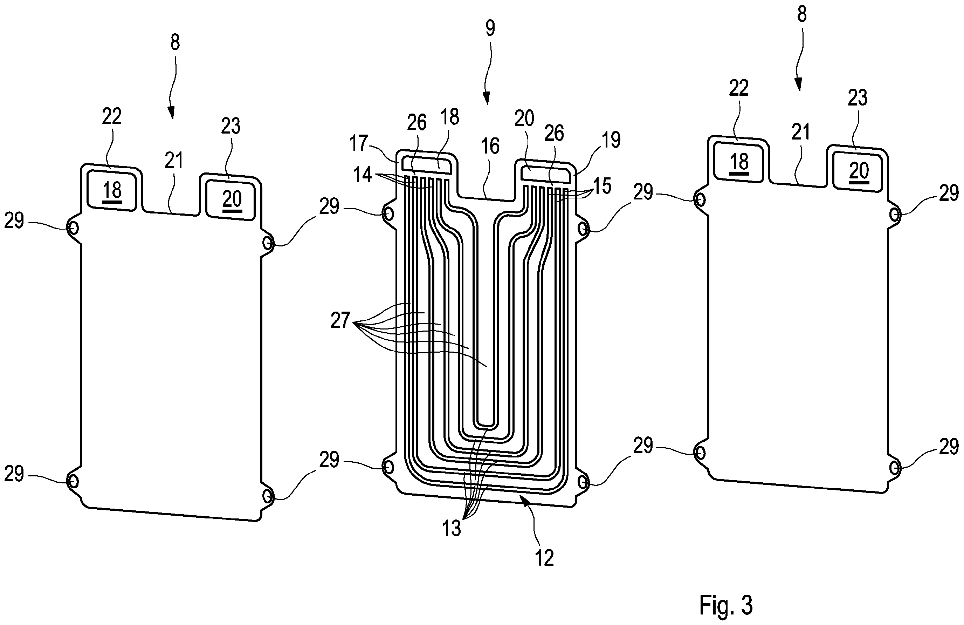

Die Einlassbügel 17, 22 der Platten 8, 9 bilden im montierten Zustand des Kühlelements 2 einen Einlasskanalabschnitt 24, von dem der jeweilige Kühlmitteleinlass 14 abgeht. Gleichermaßen bilden die Auslassbügel 19, 23 Platten 8, 9 einen Auslasskanalabschnitt 25, in den der jeweilige Kühlmittelauslass 15 einmündet. Entsprechend den Figuren 2 und 3 kann die Innenplatte 9 innerhalb des Einlassbügels 17, also im Einlassbereich 18 sowie im Auslassbügel 19 bzw. im Auslassbereich 20 jeweils einen Haltebereich 26 aufweisen, der innerhalb der Innenplatte 9 eine Positionierung der Kühlkanalstruktur 12 ermöglicht. Durch die Ausbildung der einzelnen Kühlkanäle 13 wird die Innenplatte 9 in eine entsprechende Anzahl von Innenplattenteilen 27 unterteilt, welche die Kühlkanäle 13 innerhalb der Plattenebene seitlich begrenzen. Dementsprechend ist die Anzahl dieser Innenplattenteile 27 stets um eins größer als die Anzahl der Kühlkanäle 13. Dementsprechend sind im Beispiel sieben derartige Innenplattenteile 27 vorgesehen. Die einzelnen Innenplattenteile 27 sind abgesehen von den Haltebereichen 26 ohne Kontakt zueinander, da sie durch die Kühlkanäle 13 voneinander getrennt sind. Ohne die Haltebereiche 26 wären die Innenplattenteile 27 relativ zueinander beweglich. Die Haltebereiche 26 ermöglichen somit insbesondere eine vereinfachte Handhabung der Innenplatten 9 bei hergestellter Kühlkanalstruktur 12.

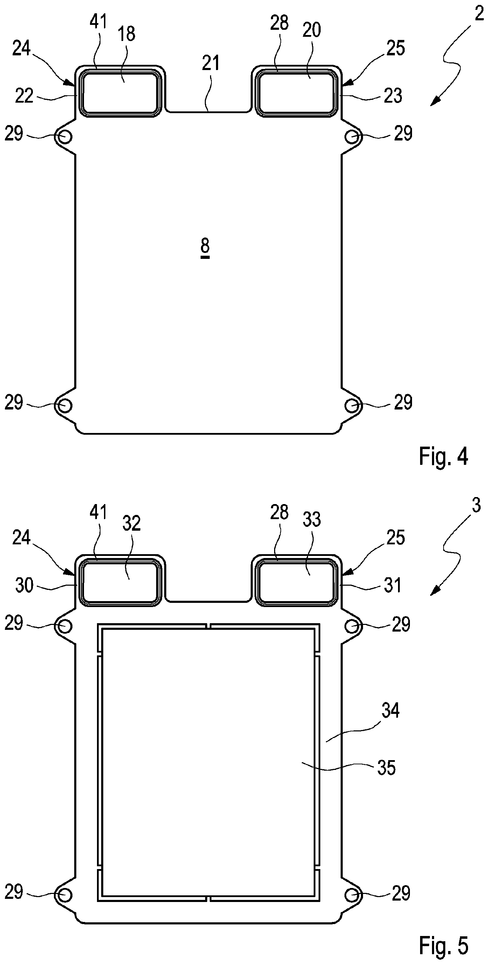

Gemäß Figur 2 ragen die Haltebereiche 26 bis in den Einlassbereich 18 bzw. bis in den Auslassbereich 20 hinein. Figur 4 zeigt nun eine modifizierte Ausführungsform des Kühlelements 2, bei der die Haltebereiche 26 entfernt worden sind, wodurch der durchströmbare Querschnitt des Einlassbereichs 18 und des Auslassbereichs 20 vergrößert ist. Diese Maßnahme kann insbesondere den Durchströmungswiderstand reduzieren.

Unabhängig davon, ob der jeweilige Haltebereich 26 entfernt worden ist oder nicht, kann zumindest eine der Außenplatte 8 gemäß Figur 4 eine Einlassdichtung 41 aufweisen, die am Einlassbügel 22 angebracht ist und die an der von der Innenplatte 9 abgewandten Außenseite 10 der jeweiligen Außenplatte 8 absteht. Im Beispiel der Figur 4 ist außerdem an der dem Betrachter zugewandten Außenplatte 8 eine Auslassdichtung 28 angebracht, und zwar am Auslassbügel 23, wobei die jeweilige Auslassdichtung 28 ebenfalls an der von der Innenplatte 9 abgewandten Außenseite 10 absteht. Die Einlassdichtung 41 umschließt den Einlassbereich 18 und die Auslassdichtung 28 umschließt den Auslassbereich 20.

Die Außenplatten 8 und die Innenplatte 9 weisen außerdem Haltelaschen 29 auf, die ebenfalls an einem Außenrand der jeweiligen Platte 8, 9 angeordnet sind und in der jeweiligen Plattenebene abstehen. Die Haltelaschen 29 sind zueinander fluchtend angeordnet und ermöglichen eine Befestigung der Kühlelemente 2 innerhalb des Stapels 7 des Energiespeichers 1.

Figur 5 zeigt exemplarisch ein Batterieelement 3. Auch das Batterieelement 3 kann fluchtend zu den Einlassbügeln 17, 22 einen ersten Bügel 30 und fluchtend zu den Auslassbügeln 19, 23 einen zweiten Bügel 31 aufweisen. Auch dem ersten Bügel 30 kann eine Einlassdichtung 41 zugeordnet sein, während dem zweiten Bügel 31 eine Auslassdichtung 28 zugeordnet sein kann. Ferner können auch die Bügel 30, 31 des Batterieelements 3 einen Einlasskanalabschnitt 24 bzw. einen Auslasskanalabschnitt 25 bilden. Ebenso kann auch das Batterieelement 3 mit Haltelaschen 29 ausgestattet sein, die zu den Haltelaschen 29 der Kühlelemente 2 fluchten.

Die jeweilige fluchtende Anordnung der Bügel 17, 22, 30 bzw. 19, 23, 31 sowie der Haltelaschen 29 orientiert sich dabei parallel zur Stapelrichtung 4.

Im zusammengebauten Zustand des Energiespeichers 1, also innerhalb des Stapels 7 bilden die einander abwechselnden Einlassbügel 17, 22 und die ersten Bügel 30 einen Kühlmitteleinlasskanal 32, während die einander abwechselnden Auslassbügel 19, 23 und die zweiten Bügel 31 einen Kühlmittelauslasskanal 33 bilden.

Bei der in Figur 5 gezeigten speziellen Ausführungsform umfasst das jeweilige Batterieelement 3 einen Tragrahmen 34 und eine Batteriezelle 35, die innerhalb des Tragrahmens 34 auf geeignete Weise gehalten ist. Die Batteriezelle 35, zum Beispiel eine Lithium-Ionen-Zelle, besitzt voneinander abgewandte, zueinander parallele ebene Außenseiten, welche einen wesentlichen Bestandteil der Außenseiten 6 des Batterieelements 3 bilden. Dementsprechend kontaktieren die Kühlelemente 2 mit ihren Außenseiten 5 die Außenseiten der Batteriezelle 35 vollständig und vollflächig.

Gemäß Figur 5 sind der jeweilige erste Bügel 30 und der jeweilige zweite Bügel 31 sowie die Haltelaschen 29 am Tragrahmen 34 ausgebildet.

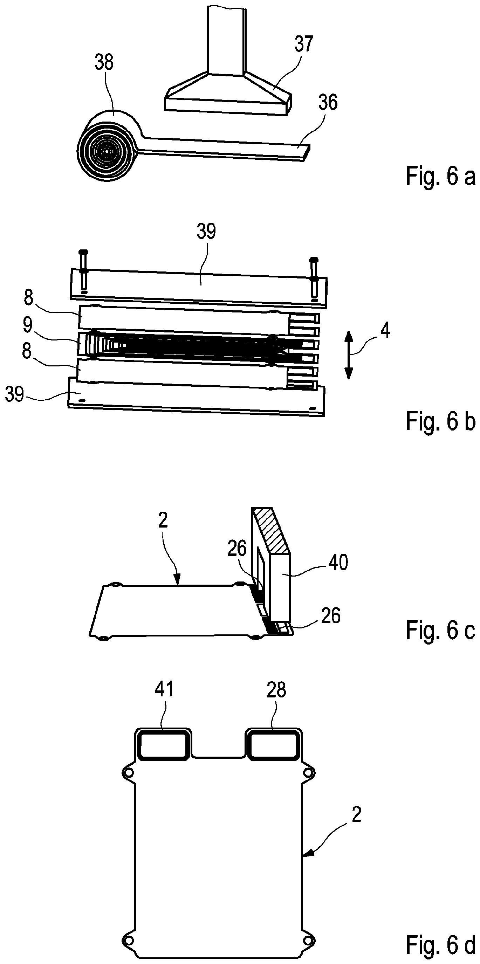

Gemäß Figur 6 können die Kühlelemente 2 beispielsweise wie folgt hergestellt werden:
Zunächst können gemäß Figur 6a aus einem Bandmaterial 36 die Außenplatten 8 und die Innenplatte 9 hergestellt werden, beispielsweise jeweils durch einen Stanzvorgang. Ein entsprechendes Stanzwerkzeug 37 ist in Figur 6a angedeutet. Das endlose Bandmaterial 36 stammt gemäß Figur 6a beispielsweise von einer Wicklung oder Spule 38. Mit Hilfe eines derartigen Stanzvorgangs kann auch die Kühlkanalstruktur 12 in der jeweiligen Innenplatte 9 hergestellt bzw. erzeugt werden. Zweckmäßig erfolgt die Herstellung der Kühlkanalstruktur 12 derart, dass die Haltebereiche 26 vorhanden sind, um die Innenplattenteile 27 relativ zueinander positionieren bzw. fixieren zu können.

Gemäß Figur 6b werden die so hergestellten Platten 8, 9 sandwichartig aufeinander gelegt, derart, dass die jeweilige Innenplatte 9 zwischen den beiden Außenplatten 8 zu liegen kommt. Zweckmäßig kann dabei zumindest eine von zwei aufeinanderliegenden Außenseiten 10, 11 mit einem Lötmittel bzw. Lötzusatzstoff versehen sein, um die aufeinanderliegenden und mit Hilfe eines entsprechenden Presswerkzeugs 39 in der Stapelrichtung 4 gegeneinander gedrückten Platten 8, 9 verlöten zu können.

Gemäß Figur 6c können in einem optionalen Fertigungsschritt die Haltebereiche 26 entfernt werden, beispielsweise mittels eines entsprechenden Stanzwerkzeugs 40. Zweckmäßig erfolgt das Entfernen der Haltebereiche 26 nach dem Verlöten der Platten 8, 9 aneinander. Grundsätzlich kann das Entfernen der Haltebereiche 26 auch vor dem Verlöten durchgeführt werden, sofern die Platten 8, 9 hinreichend fest relativ zueinander fixiert sind.

Anschließend können gemäß Figur 6d die Einlassdichtung 41 und die Auslassdichtung 28 angebracht werden, um das jeweilige Kühlelement 2 zu komplettieren.

## Patentansprüche

1. Kühlelement für einen elektrischen Energiespeicher (1), der einen Stapel (7) aus solchen Kühlelementen (2) und sich damit abwechselnden elektrischen Batterieelementen (3) aufweist,
- mit zwei Außenplatten (8), die jeweils zwei ebene, voneinander abgewandte Außenseiten (10) aufweisen,
- mit einer Innenplatte (9), die zwei ebene, voneinander abgewandte Außenseiten (11) aufweist und die eine die Innenplatte (9) durchdringende Kühlkanalstruktur (12) aufweist,
- wobei die Platten (8, 9) jeweils zueinander deckungsgleich an einem Rand (16, 21) einen Einlassbügel (17, 22) aufweisen, der einen Einlassbereich (18) überbrückt, in dem der wenigstens eine Kühlmitteleinlass (14) der Innenplatte (9) angeordnet ist, und/oder dass die Platten (8, 9) jeweils zueinander deckungsgleich an einem Rand (16, 21) einen Auslassbügel (19, 23) aufweisen, der einen Auslassbereich (20) überbrückt, in dem der wenigstens eine Kühlmittelauslass (15) der Innenplatte (9) angeordnet ist,
- wobei zumindest eine der Außenplatten (8) eine Einlassdichtung (41) am Einlassbügel (22) aufweist, die an der von der Innenplatte (9) abgewandten Außenseite (10) absteht, und/oder dass zumindest eine der Außenplatten (9) eine Auslassdichtung (28) am Auslassbügel (23) aufweist, die an der von der Innenplatte (9) abgewandten Außenseite (10) absteht,
**dadurch gekennzeichnet, dass**
- die Kühlkanalstruktur (12) eine Vielzahl von im Wesentlichen U-förmig in der Innenplatte (9) angeordneten Kühlkanälen (13) aufweist, die jeweils an den beiden Außenseiten (11) der Innenplatte (9) offen sind und einen an einem Rand (16) der Innenplatte (9) angeordneten Kühlmitteleinlass (14) mit einem an demselben Rand (16) der Innenplatte (9) angeordneten Kühlmittelauslass (15) fluidisch verbinden,
- wobei die Außenplatten (8) mit ihren einander zugewandten Außenseiten (10) an den Außenseiten (11) der Innenplatte (9) flächig anliegen und dadurch die offenen Seiten der Kühlkanäle (13) der Kühlkanalstruktur (12) verschließen.

2. Kühlelement nach Anspruch 1 ,
**dadurch gekennzeichnet,**
**dass** die Platten (8, 9) miteinander flächig verlötet sind.

3. Kühlelement nach Anspruch 1 oder 2,
**dadurch gekennzeichnet,**
- **dass** die Einlassbügel (17, 22) flächig aneinander anliegen und/oder aneinander befestigt sind, und/oder
- **dass** die Auslassbügel (19, 23) flächig aneinander anliegen und/oder aneinander befestigt sind.

4. Kühlelement nach einem der Ansprüche 1 bis 3,
**dadurch gekennzeichnet,**
- **dass** die Einlassbügel (17, 22) einen Einlasskanalabschnitt (24) bilden, von dem der wenigstens eine Kühlmitteleinlass (14) abgeht, und/oder
- **dass** die Auslassbügel (19, 23) einen Auslasskanalabschnitt (25) bilden, in den der wenigstens eine Kühlmittelauslass (15) einmündet.

5. Elektrischer Energiespeicher, insbesondere für Fahrzeuganwendungen,
- mit mehreren Kühlelementen (2) nach einem der Ansprüche 1 bis 4,
- mit mehreren Batterieelementen (3), die jeweils zwei voneinander abgewandte, ebene Außenseiten (6) aufweisen,
- wobei die Kühlelemente (2) und die Batterieelemente (3) einander abwechselnd aufeinander gestapelt sind, wobei innerhalb des so gebildeten Stapels (7) die Außenseiten (6) der Batterieelemente (3) flächig an den Außenseiten (5) der Kühlelemente (2) anliegen.

6. Energiespeicher nach Anspruch 5,
**dadurch gekennzeichnet,**
- **dass** die Batterieelemente (3) zu den Einlassbügeln (17, 22) fluchtende erste Bügel (30) und zu den Auslassbügeln (19, 23) fluchtende zweite Bügel (31) aufweisen,
- **dass** im Stapel (7) die einander abwechselnden Einlassbügel (17, 22) und ersten Bügel (30) einen Kühlmitteleinlasskanal (32) bilden, während die einander abwechselnden Auslassbügel (19, 22) und zweiten Bügel (31) einen Kühlmittelauslasskanal (33) bilden.

7. Energiespeicher nach Anspruch 5 oder 6,
**dadurch gekennzeichnet,**
**dass** jedes Batterieelement (3) einen Tragrahmen (34) und eine vom Tragrahmen (34) gehaltene Batteriezelle (35) aufweist, wobei insbesondere vorgesehen sein kann, dass der Tragrahmen (34) den ersten Bügel (30) und den zweiten Bügel (31) aufweist.

8. Verfahren zum Herstellen eines Kühlelements (2) nach einem der Ansprüche 1 bis 4,
**gekennzeichnet durch** folgende Schritte:
- Erzeugen der Kühlkanalstruktur (12) in der Innenplatte (9),
- Einlegen der Innenplatte (9) zwischen den beiden Außenplatten (8),
- Verlöten der drei Platten (8, 9).

9. Verfahren nach Anspruch 8,
**dadurch gekennzeichnet,**
**dass** nach dem Einlegen der Innenplatte (9) oder nach dem Verlöten der Platten (8, 9) Haltebereiche (26) der Innenplatte (9) entfernt werden, die im Einlassbügel (17) und im Auslassbügel (19) über den Rand (16) der Innenplatte (9) vorstehen und zur Positionierung der Kühlkanalstruktur (12) dienen.

10. Verfahren nach Anspruch 8 oder 9, **dadurch gekennzeichnet,**
**dass** die Kühlkanalstruktur (12) durch einen Stanzvorgang hergestellt wird.

## Claims

1. Cooling element for an electric energy storage device (1) comprising a stack (7) of such cooling elements (2) and electric battery elements (3) alternating therewith,
- with two outer plates (8) respectively comprising two planar outer sides (10) facing away from each other,
- with an inner plate (9) comprising two planar outer sides (11) facing away from each other and comprising a cooling channel structure (12) penetrating through the inner plate (9),
- wherein the plates (8, 9), congruently to each other, respectively comprise an inlet bracket (17, 22) at one edge (16, 21) that spans an inlet region (18) in which the at least one coolant inlet (14) of the inner plate (9) is arranged and/or that the plates (8, 9), congruently to each other, respectively comprise an outlet bracket (19, 23) at one edge (16, 21) that spans an outlet region (20) in which the at least one coolant outlet (15) of the inner plate (9) is arranged,
- wherein at least one of the outer plates (8) comprises an inlet seal (41) on the inlet bracket (22) that protrudes at the outer side (10) facing away from the inner plate (9) and/or that at least one of the outer plates (9) comprises an outlet seal (28) on the outer bracket (23) that protrudes at the outer side (10) facing away from the inner plate (9),
**characterised in that**
- the cooling channel structure (12) comprises a number of cooling channels (13) arranged substantially in a U-shaped in the inner plate (9) that are respectively open at the two outer sides (11) of the inner plate (9) and fluidically connect a coolant inlet (14) arranged at one edge (16) of the inner plate (9) to a coolant outlet (15) arranged at the same edge (16) of the inner plate (9),
- wherein the outer plates (8) rest flat with their outer sides (10) facing each other on the outer sides (11) of the inner plate (9) and thereby close the open sides of the cooling channel (13) of the cooling channel structure (12).

2. Cooling element according to claim 1,
**characterised in that**
the plates (8, 9) are soldered flat with each other.

3. Cooling element according to claim 1 or 2,
**characterised in that**
- the inlet brackets (17, 22) rest flat on each other and/or are fastened onto each other and/or
- the outlet brackets (19, 23) rest flat on each other and/or are fastened onto each other.

4. Cooling element according to any one of claims 1 to 3,
**characterised in that**
- the inlet brackets (17, 22) form an inlet channel section (24) from which the at least one coolant inlet (14) exits and/or
- the outlet brackets (19, 23) form an outlet channel section (25) into which the at least one coolant outlet (15) opens.

5. Electrical energy storage device, in particular for vehicle applications,
- with a plurality of cooling elements (2) according to any one of claims 1 to 4,
- with a plurality of battery elements (3) respectively comprising two outer sides (6) facing away from each other,
- wherein the cooling elements (2) and the battery elements (3) are stacked alternately on top of each other, wherein the outer sides (6) of the battery elements (3) rest flat on the outer sides (5) of the cooling elements (2) inside the stack (7) formed in this way.

6. Energy storage device according to claim 5,
**characterised in that**
- the battery elements (3) comprise first bracket (30) aligned with the inlet brackets (17, 22) and second bracket (31) aligned with the outlet brackets (19, 23),
- in the stack (7), the alternating inlet brackets (17, 22) and first bracket (30) form a coolant inlet channel (32), while the alternating outlet brackets (19, 22) and second bracket (31) form a coolant outlet channel (33).

7. Energy storage device according to claim 5 or 6,
**characterised in that**
each battery element (3) comprises a support frame (34) and a battery cell (35) held by the support frame (34) wherein in particular the support frame (34) comprises the first bracket (30) and the second bracket (31).

8. Method for producing a cooling element (2) according to any one of claims 1 to 4, **characterised by** the following steps:
- generating the cooling channel structure (12) in the inner plate (9),
- inserting the inner plate (9) between the two outer plates (8),
- soldering the three plates (8, 9).

9. Method according to claim 8,
**characterised in that**
after inserting the inner plate (9) or after soldering the plates (8, 9), holding regions (26) of the inner plate (9) are removed which project over the edge (16) of the inner plate (9) in the inlet bracket (17) and in the outlet bracket (19) and serve for positioning the cooling channel structure (12).

10. Method according to claim 8 or 9,
**characterised in that**
the cooling channel structure (12) is produced by a stamping process.

## Revendications

1. Élément de refroidissement pour un accumulateur d'énergie électrique (1), qui comporte une pile (7) d'éléments de refroidissement (2) de ce type et d'éléments de batterie électrique (3) alternant avec ceux-ci,
- avec deux plaques extérieures (8), qui comportent chacune deux côtés extérieurs (10) plans et éloignés l'un de l'autre,
- avec une plaque intérieure (9), qui comporte deux côtés extérieurs (11) plans et éloignés l'un de l'autre et qui comporte une structure de canaux de refroidissement (12) passant à travers la plaque intérieure (9),
- dans lequel les plaques (8, 9) comportent chacune un arceau d'entrée (17, 22) qui coïncide l'un avec l'autre au niveau d'un bord (16, 21), et qui passe par-dessus une zone d'entrée (18), dans laquelle est agencée l'au moins une entrée de fluide de refroidissement (14) de la plaque intérieure (9) et/ou les plaques (8, 9) comportent chacune un arceau de sortie (19, 23) qui coïncide l'un avec l'autre au niveau d'un bord (16, 21) et qui passe par-dessus une zone de sortie (20), dans laquelle est agencée l'au moins une sortie de fluide de refroidissement (15) de la plaque intérieure (9),
- dans lequel au moins l'une des plaques extérieures (8) comporte au niveau de l'arceau d'entrée (22) une garniture d'étanchéité d'entrée (41) qui dépasse du côté extérieur (10) éloigné de la plaque intérieure (9), et/ou au moins l'une des plaques extérieures (9) comporte au niveau de l'arceau de sortie (23) une garniture d'étanchéité de sortie (28), qui dépasse du côté extérieur (10) éloigné de la plaque intérieure (9),
**caractérisé en ce que**
- la structure de canaux de refroidissement (12) comporte plusieurs canaux de refroidissement (13) qui sont agencés globalement en forme de U dans la plaque intérieure (9) et qui sont ouverts à chaque fois au niveau des deux côtés extérieurs (11) de la plaque intérieure (9) et relient pour le fluide une entrée de fluide de refroidissement (14) agencée au niveau d'un bord (16) de la plaque intérieure (9) à une sortie de fluide de refroidissement (15) agencée au niveau du même bord (16) de la plaque intérieure (9),
- les plaques extérieures (8) s'appuyant par leurs surfaces avec leurs côtés extérieurs (10) proches l'un de l'autre contre les côtés extérieurs (11) de la plaque intérieure (9) et fermant ainsi les côtés ouverts des canaux de refroidissement (13) de la structure de canaux de refroidissement (12).

2. Élément de refroidissement selon la revendication 1,
**caractérisé en ce que**
les plaques (8, 9) sont brasées les unes avec les autres via leurs surfaces.

3. Élément de refroidissement selon la revendication 1 ou 2,
**caractérisé en ce que**
- les arceaux d'entrée (17, 22) s'appuient l'un contre l'autre par leurs surfaces et/ou sont fixés l'un à l'autre, et/ou
- les arceaux de sortie (19, 23) s'appuient l'un contre l'autre par leurs surfaces et/ou sont fixés l'un à l'autre.

4. Élément de refroidissement selon l'une des revendications 1 à 3,
**caractérisé en ce que**
- les arceaux d'entrée (17, 22) forment un tronçon de canal d'entrée (24) à partir duquel part l'au moins une entrée de fluide de refroidissement (14), et/ou
- les arceaux de sortie (19, 23) forment un tronçon de canal de sortie (25) dans lequel débouche l'au moins une sortie de fluide de refroidissement (15).

5. Accumulateur d'énergie électrique, en particulier en vue d'une utilisation dans des véhicules,
- avec plusieurs éléments de refroidissement (2) selon l'une des revendications 1 à 4,
- avec plusieurs éléments de batterie (3), qui comportent à chaque fois deux côtés extérieurs (6) plans et éloignés l'un de l'autre,
- dans lequel les éléments de refroidissement (2) et les éléments de batterie (3) sont empilés les uns sur les autres en alternance, les côtés extérieurs (6) des éléments de batterie (3) s'appuyant par leurs surfaces contre les côtés extérieurs (5) des éléments de refroidissement (2) à l'intérieur de la pile (7) ainsi formée.

6. Accumulateur d'énergie selon la revendication 5,
**caractérisé en ce que**
- les éléments de batterie (3) comportent des premiers arceaux (30) alignés sur les arceaux d'entrée (17, 22) et des deuxièmes arceaux (31) alignés sur les arceaux de sortie (19, 23),
- dans la pile (7), les arceaux d'entrée (17, 22) et les premiers arceaux (30) qui sont disposés en alternance forment un canal d'entrée de fluide de refroidissement (32), tandis que les arceaux de sortie (19, 22) et les deuxièmes arceaux (31) qui sont disposés en alternance forment un canal de sortie de refroidissement (33).

7. Accumulateur d'énergie selon la revendication 5 ou 6,
**caractérisé en ce que**
chaque élément de batterie (3) comporte un cadre porteur (34) et une cellule de batterie (35) maintenue par le cadre porteur (34) et **en ce qu'**il peut en particulier être prévu que le cadre porteur (34) comporte le premier arceau (30) et le deuxième arceau (31).

8. Procédé de fabrication d'un élément de refroidissement (2) selon l'une des revendications 1 à 4,
**caractérisé par** les étapes suivantes :
- production de la structure de canaux de refroidissement (12) dans la plaque intérieure (9),
- placement de la plaque intérieure (9) entre les deux plaques extérieures (8),
- brasage des trois plaques (8, 9).

9. Procédé selon la revendication 8,
**caractérisé en ce que**,
après le placement de la plaque intérieure (9) ou après le brasage des plaques (8, 9), on enlève des zones de maintien (26) de la plaque intérieure (9) qui dépassent du bord (16) de la plaque intérieure (9) dans l'arceau d'entrée (17) et dans l'arceau de sortie (19) et qui servent à positionner la structure de canaux de refroidissement (12).

10. Procédé selon la revendication 8 ou 9,
**caractérisé en ce que**
la structure de canaux de refroidissement (12) est fabriquée par une opération d'estampage.
